# FASCICULE DE BREVET EUROPEEN

(11) **EP 0 539 820 B1**
(45) Date de publication et mention de la délivrance du brevet: **11.10.1995**
(21) Numéro de dépôt: 92117790.3
(22) Date de dépôt: 19.10.1992
(51) Int. Cl.: A23L 1/227, A23L 1/238, A23L 1/272, A23L 3/3526, A23L 3/3535, A23L 3/3589

(54) **Procédé pour éviter le brunissement d'un produit alimentaire**
Verfahren zur Hemmung der Bräunung eines Nahrungsmittels
Process for avoiding browning of a food product

(30) Priorité: 01.11.1991 CH 3201/91
(43) Date de publication de la demande: 05.05.1993
(73) Titulaire: SOCIETE DES PRODUITS NESTLE S.A., 1800 Vevey (CH)
(72) Inventeur: Heyland, Sven, CH-8534 Weiningen (CH); Roth, Violette, CH-8408 Winterthur (CH)
(74) Mandataire: Wavre, Claude-Alain

(56) Documents cités:
- EP-A- 0 176 094
- EP-A- 0 429 760
- FR-A- 2 039 923
- FR-A- 2 260 957
- DATABASE WPIL Section Ch, Week 8303, Derwent Publications Ltd., London, GB; Class D, AN 83-05992K
- DATABASE WPI Section Ch, Week 7519, Derwent Publications Ltd., London, GB; Class D, AN 75-31621W
- DATABASE WPIL Section Ch, Week 9123, Derwent Publications Ltd., London, GB; Class D, AN 91-166588
- DATABASE WPIL Section Ch, Week 8230, Derwent Publications Ltd., London, GB; Class B, AN 82-62829E
- PATENT ABSTRACTS OF JAPAN vol. 15, no. 137 (C-821)(4665) 5 Avril 1991

## Description

La présente invention a trait à un procédé permettant d'éviter le brunissement d'un produit alimentaire comprenant une source d'acides aminés et des hydrates de carbone, et plus particulièrement au moins un groupe carbonyle libre. La présente invention concerne également un produit alimentaire qui ne brunit pas au cours du temps.

FR-A-2039923 décrit un procédé de préparation d'une substance aromatisante dans lequel on fait réagir un monosaccharide, en particulier un pentose ou un hexose, avec un acide aminé, en présence d'eau et de sulfure d'hydrogène ou d'une substance pouvant donner du sulfure d'hydrogène à une température de plus de 60°C à 150°C durant 15 min à 6 h.

FR-A-2260957 décrit un procédé de préparation d'un aromate, dans lequel on mélange un monosaccharide, en particulier un pentose ou un hexose, avec une plastéine améliorée par l'addition d'un acide aminé contenant du soufre, et l'on chauffe le mélange en présence d'eau à une température comprise entre 80 et 120°C.

EP-A-176094 décrit une solution alimentaire parentérale comprenant des sucres réducteurs, des acides aminés et des électrolytes dans une composition et des proportions telles que la solution ne brunisse pas à la stérilisation.

On connaît, par exemple par la demande de brevet EP 417481 un procédé de préparation d'une sauce de soja, par fermentation d'un koji, hydrolyse du koji fermenté, addition de chlorure de sodium afin d'obtenir un moromi, puis fermentation dudit moromi. On obtient, par pressage, et après pasteurisation et clarification du jus pressé, une sauce de soja fermentée, de couleur brun foncé, qu'il est possible de sécher et de stocker pendant une longue période.
La couleur brun foncé de la sauce de soja est due en partie à la réaction de Maillard, réaction se produisant lorsqu'un mélange comprenant des acides aminés et des hydrates de carbone, dont au moins un groupe carbonyle libre, est traité thermiquement, séché par exemple. La vitesse de brunissement du produit, ainsi que la couleur obtenue, dépendent principalement des conditions expérimentales, à savoir la température et la durée du traitement thermique.

Afin d'éviter un tel brunissement du produit lors du traitement thermique, il est possible de contrôler la réaction, en température et en durée, et de l'arrêter avant apparition d'une note colorée trop foncée, au détriment toutefois de l'arôme qui n'a pas la possibilité de se développer complètement.

Il a été proposé, par le brevet JP 57100177, d'ajouter avant réaction au mélange acides aminés-hydrates de carbone, un agent inhibiteur de coloration consistant en au moins un sel de calcium, de préférence le chlorure de calcium. Le mélange obtenu est alors moins susceptible de brunir, par réaction de Maillard, lors du traitement thermique ultérieur.

Encore un autre procédé pour éviter le brunissement d'un produit lors de sa préparation est proposé par le brevet CA 850 600, et consiste à ajouter au mélange acides aminés-hydrates de carbone, un composé organique susceptible de s'hydrolyser au contact de l'eau. Le produit obtenu conserve alors sa couleur initiale pendant au moins 4 jours de stockage à 55°C, suivi de 1 jour à 90°C.

Ces différents procédés permettent d'éviter en partie l'apparition d'une coloration brun foncé, par réaction de Maillard, pendant le traitement thermique, lors de la préparation du produit final.

D'autre part, lorsque ces produits alimentaires présentent une teneur élévée en sucres réducteurs, ce qui est le cas, par exemple, des sauces de soja et des agents aromatisants à base de soja, ces sucres peuvent réagir pendant l'étape de séchage du produit, et même au cours de son stockage, et modifier les qualités organoleptiques du produit, en développant une couleur foncée, et éventuellement un goût caramélisé, indésirables.

Le but de la présente invention est de proposer un procédé permettant, d'une part, d'éviter le brunissement du produit lors de sa préparation et, le cas échéant, également lors de son séchage, et d'autre part, d'éviter la modification des qualités organoleptiques du produit, entre autre ses goût et couleur, lors de son stockage.

La présente invention a donc pour objet un procédé pour éviter le brunissement d'un produit alimentaire choisi dans un groupe formé par une sauce de soya fermentee et un agent aromatisant obtenu par hydrolyse enzymatique d'une matière riche en protéines et maturation à l'aide d'enzymes de koji, dans lequel on incorpore audit produit alimentaire un composé possédant ou pouvant développer un groupe thiole choisi dans le groupe constitué par la cystine, la cystéine, la thiamine et le sulfure d'hydrogène, à raison de 0,01 à 0,1 partie en poids dudit composé pour une partie en poids dudit produit puis l'on traite thermiquement le produit obtenu à 95-110°C, pendant 1-5 heures.

Le présent procédé permet l'obtention d'un produit alimentaire ayant un aspect et des qualités organoleptiques comparables à celles d'un produit n'ayant pas été traité thermiquement; toutefois le produit traité selon le présent procédé est beaucoup plus stable au stockage. En effet le procédé selon l'invention permet de dégrader thermiquement les sucres réducteurs libres encore présents dans le produit après sa préparation, et donc d'épuiser de manière totale leur potentiel réducteur en les faisant réagir en présence d'un composé possédant ou pouvant développer un groupe thiole. On obtient ainsi un produit exempt de sucres réducteurs libres, produit qui ne réagira pas lors de son éventuel séchage ultérieur, et lors de son stockage.

Dans la suite de la présente description, les pourcentages et parties sont indiqués en poids, sauf indications contraires. contraires.

Le procédé selon la présente invention peut être appliqué à la préparation de tout produit alimentaire choisi dans un groupe formé par une sauce de soya fermentée et un agent aromatisant obtenu par hydrolyse enzymatique d'une matière riche en protéines et maturation à l'aide d'enzymes de koji.

Ainsi, dans une première forme de réalisation, le présent procédé peut être mis en oeuvre lors de la préparation d'une sauce de soja fermentée.
Un exemple de préparation de sauce de soja fermentée en poudre est donné dans la demande de brevet EP 417481,
Selon le procédé décrit dans cette demande, on laisse fermenter, en présence d'une culture de koji, un mélange de soja cuit et de blé rôti, on hydrolyse le produit fermenté, en suspension aqueuse, à 45-60°C, pendant 3-8 heures, en présence des enzymes de koji produites durant la fermentation, puis l'on ajoute du chlorure de sodium au produit hydrolysé et on laisse à nouveau fermenter pendant plusieurs jours. On presse alors le produit obtenu et l'on récupère le jus qui peut être clarifié et pasteurisé. On obtient ainsi une sauce soja liquide, présentant une teneur en matière sèche de 30% environ. Selon un premier mode d'exécution de cette réalisation, on peut ajouter à une partie de sauce soja liquide, 0,01 à 0,1 partie d'un composé possédant ou pouvant développer un groupe thiole. Le mélange ainsi préparé est ensuite traité thermiquement à 95-110°C, pendant 1 à 5 heures. Le traitement thermique peut être effectué par exemple sous reflux, dans un réacteur à double manteau. Après traitement thermique, on obtient une sauce liquide de couleur claire que l'on peut utiliser et/ou stocker telle quelle, ou que l'on peut concentrer afin d'obtenir une pâte, ou encore que l'on peut sécher et moudre afin d'obtenir une sauce soja en poudre.

Il est également possible d'effectuer le traitement thermique en continu avec l'étape de séchage de la pâte, par exemple en traitant tout d'abord la pâte à 95-110°C, pendant 1-5 heures dans le sécheur, puis en la séchant à 60-80°C, sous pression réduite jusqu'à obtention d'une poudre.
Selon un deuxième mode d'exécution de cette réalisation, lorsque l'on dispose déjà d'une sauce soja en poudre, on peut ajouter à une partie de ladite sauce soja en poudre, 0,15-0,30 partie d'eau et 0,01-0,1 partie d'un composé possédant ou pouvant développer un groupe thiole, de manière à obtenir une pâte présentant une teneur en matière sèche de 80-90%, puis traiter thermiquement cette pâte à 95-110°C pendant 1-5 heures.
On peut ensuite soit stocker et/ou utiliser la pâte ainsi traitée telle quelle, soit la sécher et la moudre de manière à obtenir une sauce soja en poudre.

Dans une autre forme de réalisation, le présent procédé peut être mis en oeuvre lors de la préparation d'un agent aromatisant. Un tel exemple est donné dans la demande de brevet EP 429 760.

Selon le procédé décrit dans cette demande, on prépare une suspension aqueuse d'une matière riche en protéines, on hydrolyse la suspension à pH 6,0-11,0 à l'aide d'une protéase afin de solubiliser les protéines, on traite thermiquement la suspension hydrolysée, à pH 4,6-6,0, et l'on fait mûrir la suspension traitée thermiquement à l'aide d'enzymes de koji. Après maturation, on peut presser la suspension afin d'en extraire un jus limpide que l'on peut pasteuriser et clarifier. Ce jus limpide présente de préférence une teneur en matière sèche de 30% environ et peut être utilisé tel quel comme agent aromatisant.
Selon un premier mode d'exécution de cette réalisation, on peut ajouter à une partie d'agent aromatisant liquide, 0,01 à 0,1 partie d'un composé possédant ou pouvant développer un groupe thiole, puis traiter thermiquement le mélange obtenu à 95-110°C pendant 1-5 heures.
Après le traitement thermique, on obtient un agent aromatisant liquide, de couleur claire, qu'il est possible d'utiliser tel quel ou après l'avoir concentré, et/ou séché et réduit en poudre.
Il est également possible d'effectuer le traitement thermique en continu et/ou simultanément à l'étape de concentration et/ou de séchage.
Selon un deuxième mode d'exécution de cette réalisation, lorsque l'on dispose déjà d'un agent aromatisant en poudre, on peut ajouter à une partie dudit agent aromatisant, 0,15-0,30 partie d'eau et 0,01-0,1 partie d'un composé possédant ou pouvant développer un groupe thiole, puis traiter thermiquement ce mélange à 95-110°C, pendant 1-5 heures.
On peut ensuite soit stocker et/ou utiliser le produit obtenu tel quel, c'est-à-dire sous forme d'une pâte à 80-90% de matière sèche, soit sécher la pâte et la moudre afin d'obtenir un agent aromatisant en poudre.

L'invention est illustrée plus en détails dans les exemples suivants.

### Exemple 1

On prépare une sauce de soja liquide présentant une teneur en matière sèche de 30% selon le brevet EP 417481.

On lui ajoute 1% en poids, par poids de matière sèche, de cystéine, HCl, H₂O, puis l'on traite thermiquement le mélange obtenu dans un réacteur à double manteau, pendant 5 heures, à une température de 100°C.
On laisse ensuite refroidir le mélange jusqu'à environ 60-70°C, puis on le concentre, dans un évaporateur, à une température de 65°C, jusqu'à obtention d'une teneur en matière sèche de 85%.
La pâte ainsi obtenue est alors séchée dans un sécheur, sous une pression réduite de 15 mbar, à 70°C, pendant environ 8 heures jusqu'à obtention d'une teneur en matière sèche de 98%, puis moulue dans un moulin à marteaux.
On obtient ainsi une sauce soja en poudre, de couleur claire (sauce soja C).
On détermine l'intensité de la couleur de la sauce soja en poudre, par mesure du coefficient d'extinction d'une solution aqueuse à 1%, à l'aide d'un spectrophotomètre, avec les conditions expérimentales suivantes:
- cuvette: 1 cm
- longueur d'onde: 500 nm

La même mesure est effectuée
- pour une sauce de soja ne contenant pas de cystéine et n'ayant pas été traitée thermiquement à 100°C pendant 5 heures (témoin A), et
- pour une sauce de soja préparée et traitée thermiquement de la même manière que la sauce C, mais ne contenant pas de cystéine (témoin B).

On obtient les résultats suivants:

| | coefficient d'extinction | observations visuelles |
|---|---|---|
| Témoin A | 0,36 | couleur beige clair |
| Témoin B | 0,80 | couleur brun foncé |
| Sauce soja C | 0,36 | couleur beige clair |

Ainsi, on observe que le procédé selon l'invention permet l'obtention d'une sauce de soja en poudre possédant des caractéristiques comparables à celles d'une sauce de soja non traitée, ne contenant pas de cystéine, c'est-à-dire couleur claire et léger goût de viande.

La sauce de soja ne contenant pas de cystéine et ayant été traitée thermiquement est, par contre, d'une couleur très foncée.

### Exemple 2

Soit une sauce de soja en poudre, présentant une teneur en matière sèche de 99%, préparée selon le brevet EP 417481.
On lui ajoute de la cystéine, HCl, H₂0 dans les quantités précisées ci-après, et de l'eau de manière à obtenir une pâte présentant une teneur en matière sèche de 85%. La pâte est ensuite traitée thermiquement dans un réacteur à double manteau, à une température de 100°C, pendant une durée variable.
Après le traitement thermique, on laisse la pâte refroidir et on la sèche, sous une pression réduite de 15 mbar, à 70°C, pendant environ 8 heures de manière à obtenir une poudre à 99% de matière sèche.
On moud ensuite la poudre dans un moulin à marteaux. La mesure du coefficient d'extinction, effectuée dans les mêmes conditions que dans l'exemple 1, donne les résultats suivants:

| Echantillon | cystéine (% par poids de matière sèche) | temps de traitement (heures) | coefficient d'extinction |
|---|---|---|---|
| D | 0 | 1 | 0,97 |
| E | 1 | 1 | 0,66 |
| F | 5 | 5 | 0,38 |

La sauce E, contenant de la cystéine, présente après traitement thermique, une couleur beaucoup plus claire que la sauce D ne contenant pas de cystéine.
De plus, la sauce F, qui a subi un traitement thermique plus long que la sauce E, présente une couleur plus claire, due à la présence d'une quantité plus importante de cystéine.

### Exemple 3

La sauce de soja C (1% cystéine, traitée à 100°C pendant 5 heures) et la sauce-témoin A (ni cystéine, ni traitement thermique), préparées selon l'exemple 1, sont stockées pendant 4 mois à diverses températures.
On détermine alors, selon l'exemple 1, le coefficient d'extinction pour les différentes sauces. On obtient les résultats suivants:

| Température de stockage (°C) | | | | | |
|---|---|---|---|---|---|
| | -25 | +20 | +25 | +30 | +37 |
| Sauce C | 0,36 | 0,36 | 0,37 | 0,42 | 0,89 |
| Témoin A | 0,36 | 0,36 | 0,39 | 0,43 | 1,53 |

Après six mois de stockage, on obtient les résultats suivants:

| Température de stockage (°C) | | | | |
|---|---|---|---|---|
| | -25 | +20 | +25 | +30 |
| Sauce C | 0,35 | 0,38 | 0,38 | 0,43 |
| Témoin A | 0,36 | 0,37 | 0,41 | 0,52 |

Lors d'un stockage de longue durée à une température de 25°C ou moins, on n'observe presque aucune différence entre la sauce selon l'invention et la sauce-témoin.
Après un stockage de 6 mois à 30°C, la sauce-témoin présente une couleur plus foncée que la sauce selon l'invention, ce qui confirme le rôle "protecteur" joué par la cystéine, pendant le stockage.
Le changement de couleur intervenant pour les sauces stockées à 37°C pourrait être dû à une libération subite de l'eau de cristallisation contenue dans lesdites sauces. Même dans ce cas, on observe que l'effet est moins prononcé pour la sauce selon l'invention.

### Exemple 4

On prépare une sauce de soja en poudre présentant une teneur en matière sèche de 98%.

On lui ajoute de la cystéine, HCl, H₂O, dans les quantités indiquées ci-après et de l'eau de manière à obtenir une pâte présentant une teneur en matière sèche de 85%, puis on la traite thermiquement à 100°C, pendant 1 heure, dans un réacteur à double manteau.
Après ce traitement, on laisse la pâte refroidir et on la sèche, sous une pression réduite de 15 mbar, à 70°C, jusqu'à obtention d'une poudre présentant une teneur en matière sèche de 98%.
On effectue une mesure du coefficient d'extinction de ces différentes poudres, à l'aide d'un spectrophotomètre, dans les conditions suivantes:

| | |
|---|---|
| échantillon: | 2,5 g dans 50 ml |
| cuvette: | 1 cm |
| longueur d'onde: | 550 nm |

La même mesure est effectuée pour une poudre-témoin ne contenant pas de cystéine et n'ayant pas été traitée thermiquement (échantillon G).
On obtient les résultats suivants:

| Echantillon | cystéine (% en poids de matière sèche) | coefficient d'extinction |
|---|---|---|
| sans traitement thermique | | |
| témoin G | 0 | 0,88 |

| avec traitement thermique | | |
|---|---|---|
| témoin H | 0 | 2,38 |
| pâte I | 1 | 1,62 |
| pâte J | 2 | 1,16 |
| pâte K | 5 | 0,93 |
| pâte L | 10 | 0,76 |

Cet exemple confirme l'effet protecteur du procédé selon l'invention, c'est-à-dire la combinaison de l'ajout de cystéine et d'un traitement thermique.

### Exemple 5

On prépare un agent aromatisant présentant une teneur en matière sèche de 30%, selon le brevet EP 429 760. On lui ajoute 1% en poids par poids de matière sèche, de cystéine, HCl, H₂O, puis l'on traite thermiquement le mélange obtenu dans un réacteur à double manteau, pendant 5 heures, à une température de 100°C.
On laisse ensuite refroidir le mélange jusqu'à environ 60-70°C, puis on le concentre, dans un évaporateur, à une température de 65°C, jusqu'à obtention d'une teneur en matière sèche de 85%.
La pâte ainsi obtenue est alors séchée,dans un sécheur, sous une pression réduite de 15 mbar, à 70°C, pendant environ 8 heures jusqu'à obtention d'une teneur en matière sèche de 98%, puis moulue dans un moulin à marteaux.
On obtient ainsi un agent aromatisant en poudre, de couleur claire.

On détermine le coefficient d'extinction d'une solution aqueuse contenant 1% dudit agent aromatisant en poudre, à l'aide d'un spectrophotomètre, dans les conditions expérimentales suivantes:

| | |
|---|---|
| cuvette: | 1 cm |
| longueur d'onde: | 500 nm |

On détermine ce coefficient:
- juste après la préparation de l'agent aromatisant (t=0),
- après 4 mois de stockage à une température donnée (t=4 mois),
- après 6 mois de stockage à une température donnée (t=6 mois).

Pour comparaison, on détermine, dans les mêmes conditions, le coefficient d'extinction pour une solution à 1% d'un agent aromatisant-témoin, préparé selon le brevet EP 429 760, concentré et séché de la manière décrite ci-dessus, mais ne contenant pas de cystéine, et n'ayant pas été traité thermiquement. On obtient les résultats suivants:

| Température de stockage | Coefficient d'extinction (%) | |
|---|---|---|
| | Témoin | Agent aromatisant |
| t=0 | -- | -- |
| t=4 mois | | |
| -25°C | 0,33 | 0,31 |
| +20°C | 0,32 | 0,31 |
| +25°C | 0,32 | 0,31 |
| +30°C | 0,32 | 0,31 |
| +37°C | 0,47 | 0,34 |

| t=6 mois | | |
|---|---|---|
| -25°C | 0,32 | 0,32 |
| +20°C | 0,31 | 0,31 |
| +25°C | 0,32 | 0,32 |
| +30°C | 0,33 | 0,32 |
| +37°C | 0,53 | 0,35 |

L'agent aromatisant selon l'invention présente donc, avant stockage, des caractéristiques semblables à celles de l'agent-témoin sur le plan de la couleur et du goût. Ces caractéristiques restent comparables quand les agents aromatisants sont stockés à une température inférieure à 30°C. Lors du stockage à 37°C, l'agent aromatisant selon l'invention brunit beaucoup moins vite que l'agent-témoin. Ceci peut être dû au fait que l'eau de cristallisation présente dans ledit agent-témoin est libérée subitement, ce qui entraîne un changement de la valeur d'activité de l'eau (Aw).

## Revendications

1. Procédé pour éviter le brunissement d'un produit alimentaire choisi dans un groupe formé par une sauce de soya fermentée et un agent aromatisant obtenu par hydrolyse enzymatique d'une matière riche en protéines et maturation à l'aide d'enzymes de koji, dans lequel on incorpore audit produit alimentaire un composé possédant ou pouvant développer un groupe thiole choisi dans le groupe constitué par la cystine, la cystéine, la thiamine et le sulfure d'hydrogène, à raison de 0,01 à 0,1 partie en poids dudit composé pour une partie en poids dudit produit, puis l'on traite thermiquement le produit obtenu à 95-110°C, pendant 1-5 heures.

## Claims

1. A process for avoiding the browning of a food product selected from a group comprising fermented soya sauce and a flavouring agent obtained by the enzymic hydrolysis of a protein-rich material and maturation with the help of koji enzymes, in which a compound possessing or capable of developing a thiol group selected from the group comprising cystine, cysteine, thiamine and hydrogen sulphide is incorporated into the said food product in a ratio of between 0.01 and 0.1 parts by weight of the said compound per part by weight of the said product, after which the product obtained is heat treated at 95-110° for 1-5 hours.

## Patentansprüche

1. Verfahren zum Vermeiden der Braunfärbung eines Nahrungsmittels, welches Gas einer Gruppe ausgewählt ist, die aus einer fermentierten Sojasoße und einem Würzmittel besteht, das durch enzymatische Hydrolyse eines proteinreichen Materials und Reifung mittels Koji-Enzymen gewonnen worden ist, gemäß welchem Verfahren in das genannte Nahrungsmittel eine Verbindung eingearbeitet wird, welche eine Thiolgruppe besitzt oder zu entwickeln vermag und welche aus einer aus Cystin, Cystein, Thiamin und Schwefelwasserstoff bestehenden Gruppe ausgewählt ist, und zwar in einer Menge von 0,01 bis 0,1 Gew.-Teilen der genannten Verbindung auf 1 Gew.-Teil des genannten Nahrungsmittels, wonach das erhaltene Produkt während 1 bis 5 h einer Wärmebehandlung bei 95 bis 110°C unterworfen wird.
